(19) Europäisches Patentamt
European Patent Office
Office européen des brevets

(11) EP 2 128 606 A1

(12) **EUROPÄISCHE PATENTANMELDUNG**

(43) Veröffentlichungstag:
**02.12.2009 Patentblatt 2009/49**

(51) Int Cl.:
***G01N 27/416*** *(2006.01)*

(21) Anmeldenummer: **09156693.5**

(22) Anmeldetag: **30.03.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **30.05.2008 DE 102008002134**

(71) Anmelder: **SI Analytics GmbH**
**55122 Mainz (DE)**

(72) Erfinder: **Tauber, Günter**
**65830, Kriftel (DE)**

(74) Vertreter: **Fuchs**
**Patentanwälte**
**Söhnleinstrasse 8**
**65201 Wiesbaden (DE)**

(54) **Referenz-Pufferlösung für die Schnell-Kalibrierung von pH-Messeinrichtungen**

(57) Es wird eine Referenz-Pufferlösung zur Schnell-Kalibrierung von pH-Messketten beschrieben, die aus einer herkömmlichen Pufferlösung mit bekanntem pH-Wert und einer Zusammensetzung, z.B. gemäß DIN 19266, DIN 19267 oder NIST mit einem Zusatz von mehr als 0,2 mol/l eines Leitsalzes, z.B. KCl oder $KNO_3$, besteht.

EP 2 128 606 A1

**Beschreibung**

Gegenstand der Erfindung ist eine Referenz-Pufferlösung mit kleinem Diffusionspotential für die Schnell-Kalibrierung von pH-Messeinrichtungen, auch für pH-Messeinrichtungen im industriellen Einsatz, insbesondere für solche, bei denen die Messkette bereits längere Zeit (> 1 Stunde) dem Messmedium ausgesetzt war.

pH-Messeinrichtungen müssen in unterschiedlichen Intervallen von einigen Stunden bis zu mehreren Wochen kalibriert werden. Die Kalibrierintervalle sind abhängig von der Belastung der Messkette während des Einsatzes.

Für die Kalibrierung wird die Messkette in eine oder mehrere Referenz-Pufferlösungen mit bekanntem pH-Wert, eingetaucht. Sobald sich ein stabiles Messsignal eingestellt hat, werden Änderungen bzw. Abweichungen von Messkettennullpunkt und -steilheit durch Justierung an das Messgerät angepasst, so dass die Messabweichungen nach der Kalibrierung möglichst gering sind. Es ist wichtig, dass sich während der Kalibrierung möglichst schnell ein stabiles Messsignal einstellt, damit einerseits der Wartungsaufwand nicht zu hoch wird und anderseits die stabile Gleichgewichtseinstellung der Messspannungen in den Pufferlösungen eine geringe Messunsicherheit gewährleistet.

Bei Labormesseinrichtungen treten normalerweise keine Probleme auf, da die Messketten bei Raumtemperatur unter milden Bedingungen eingesetzt und anschließend vorschriftsmäßig in KCl-Lösungen aufbewahrt werden. Bei industriellen pH-Messungen werden üblicherweise die pH-Messketten im Dauereinsatz dem Messmedium ausgesetzt. Dabei treten häufig stark belastende Bedingungen wie hohe oder niedrige Temperaturen, pH-Werte oder Leitfähigkeiten oder hohe Drucke und Druckwechsel auf.

Bei der routinemäßigen Kalibrierung von industriellen Messstellen wird häufig ein sehr langsames Einstellverhalten beobachtet. Diese Erscheinung tritt verstärkt auf bei den immer häufiger eingesetzten Messketten mit Gel- oder Polymerelektrolyt. Dadurch kann der Kalibriervorgang sehr lange (mehr als 20 Minuten) dauern und verursacht hohe Wartungskosten. Wenn der Zeitdruck sehr hoch ist, besteht die Gefahr, dass die Kalibrierung zu früh, d.h. vor Erreichen der Gleichgewichtswerte beendet wird. Durch ein solches Justieren mit Nicht-Gleichgewichtswerten sind die nachfolgenden Messungen mit teilweise erheblichen Fehlern behaftet und die Messunsicherheit ist höher als vom Betreiber gefordert.

Um dieses bekannte Problem zu lösen, gibt es z.B. folgende Ansätze:

Die Automatisierung der Kalibrierung erfolgt mit Hilfe von Fernkalibriersonden. Die integrierte Software solcher Einrichtungen benötigt ein vorgegebenes "Stabilitätskriterium" dU/dt zur automatischen Übernahme der Messwerte beim Kalibrieren und Justieren der Einrichtung. Diese Lösung ist oft nicht auf den individuellen Prozess optimiert, liefert aber meist zufriedenstellende Ergebnisse. Die Messunsicherheit wurde für solche Systeme bislang nicht ermittelt, da die Reproduzierbarkeit der Ergebnisse meist ausreicht. Wegen der hohen Investitionskosten sind solche automatischen Fernkalibriersysteme nicht sehr weit verbreitet.

Weiterhin lebt auch die sehr alte und fast vergessene Methode der Kalibrierung von Messketten im Labor unter optimalen Bedingungen und Einstellen der Kalibrierwerte am Messgerät vor Ort zurzeit wieder auf. Vereinfachend gegenüber früher ist die automatische Speicherung der digitalen Kalibrierdaten mittels eines in der speziellen Messkette integrierten Speicherbausteins (TEDS = transducer electronic data sheet). Die Messketten können im Labor vorkalibriert und später am Einsatzort ausgetauscht werden, wobei die automatische Übertragung der Daten an das Messgerät erfolgt. Durch dieses Verfahren werden Verwechselungen und Eingabefehler weitgehend vermieden und die Wartung erfordert weniger Zeit. Diese Methode ist allerdings auf teurere Messketten angewiesen, und es muss von Fall zu Fall entschieden werden, ob sich deren Einsatz lohnt. Offen ist auch die Frage, inwieweit sich die Messkette durch den Transport ins Labor, die Zeit der Lagerung und die "pflegliche Behandlung" regeneriert und ob nach der Kalibrierung die Messketteneigenschaften im Betrieb noch denen im Kalibrier-Labor entsprechen.

Die beiden genannten Methoden verbessern die Situation durch Verringerung der Möglichkeiten menschlichen Irrtums durch Einsatz höherer Material- und Investitionskosten. Die Frage nach der Messunsicherheit bzw. nach einer Verringerung der Messunsicherheit wird aber durch keine der beiden Lösungen beantwortet.

Die Aufgabe der Erfindung besteht darin, eine Pufferlösung für pH-Messeinrichtungen zu finden, die bei allen gewohnten und bewährten Kalibrierverfahren einsetzbar ist und mit der sich kürzere Wartungszeiten, ein geringerer Wartungsaufwand und verringerte Messunsicherheiten erreichen lassen.

Diese Aufgabe wird durch die in den Patentansprüchen beschriebene Referenz-Pufferlösung gelöst. Die Referenz-Pufferlösung besteht aus einer an sich bekannten, üblichen Pufferlösung mit bekanntem pH-Wert, die zusätzlich ein Leitsalz enthält, wobei die LeitsalzKonzentration größer als 0,2 mol/l ist.

Die Ursache von Störungen am Diaphragma (bzw. am Liquid Junction) von Messketten, die die regelmäßige Kalibrierung der Messkette erforderlich machen, liegt neben anderen Effekten wesentlich in der Entstehung von Diffusionspotentialen. Diese treten immer an der Kontaktstelle von zwei Elektrolyten/Lösungen unterschiedlicher Zusammensetzung bzw. Konzentrationen auf und sind auf unterschiedliche Ionenbeweglichkeiten zurückzuführen. Am Diaphragma von potentiometrischen (pH)Messketten tritt der Referenzelektrolyt mit der Messlösung in Kontakt. Als (Brücken- oder) Referenzelektrolyt wird fast ausschließlich eine Kaliumchlorid-Lösung verwendet, deren Konzentration 3 mol/l oder höher bzw. gesättigt ist. Das Salz KCl wird unter anderem deshalb verwendet, weil die Ionenbeweglichkeiten von

Kalium- und von Chloridionen etwa gleich groß sind. Durch diese Tatsache und bei der verwendeten hohen Konzentration entstehen nur sehr kleine Diffusionspotentiale in den meisten Lösungen, solange diese nicht zu sehr verdünnt sind. Für den Kontakt zwischen zwei "einfachen" Lösungen lassen sich Diffusionspotentiale nach der bekannten Hendersongleichung [P. Henderson, Z. Physik. Chem. 63, 325 (1908)] berechnen.

$$Ed(25°C) = 59{,}16mV \cdot \frac{(U1-V1)-(U2-V2)}{(U1'-V1')-(U2'-V2')} \cdot \log \frac{U1'+V1'}{U2'+V2'}$$

Hierin bedeuten Ed das Diffusionspotential, U und V bedeuten Kenngrößen für die Kationen bzw. Anionen mit der unten näher gegebenen Bedeutung.

Index 1 bezieht sich auf den Referenzelektrolyt und Index 2 auf die Messlösung.

Für die Kationen gilt:  $U = \Sigma\, c^+\, u^+$    $U' = \Sigma\, c^+\, u^+\, z_i$ und
für die Anionen:    $V = \Sigma\, c^-\, u^-$    $V' = \Sigma\, c^-\, u^-\, z_i$

Hierin bedeuten C = Konzentration in mol/kg bzw. mol/l, u = Ionenbeweglichkeit in $cm^2/V\ s$) und z = absolute elektrische Ladung des Ions.

In den meisten Lösungen mit 3 <pH<11 liegen die Diffusionspotentiale zwischen etwa -6 mV bis +6 mV, wenn die KCl-Konzentration des Referenzelektrolyten > 2 mol/l beträgt. Auch in den üblicherweise verwendeten Pufferlösungen betragen die Diffusionspotentiale akzeptabel niedrige Werte von etwa -2 mV. Hier stimmen experimentell ermittelte Werte recht gut mit den berechneten überein.

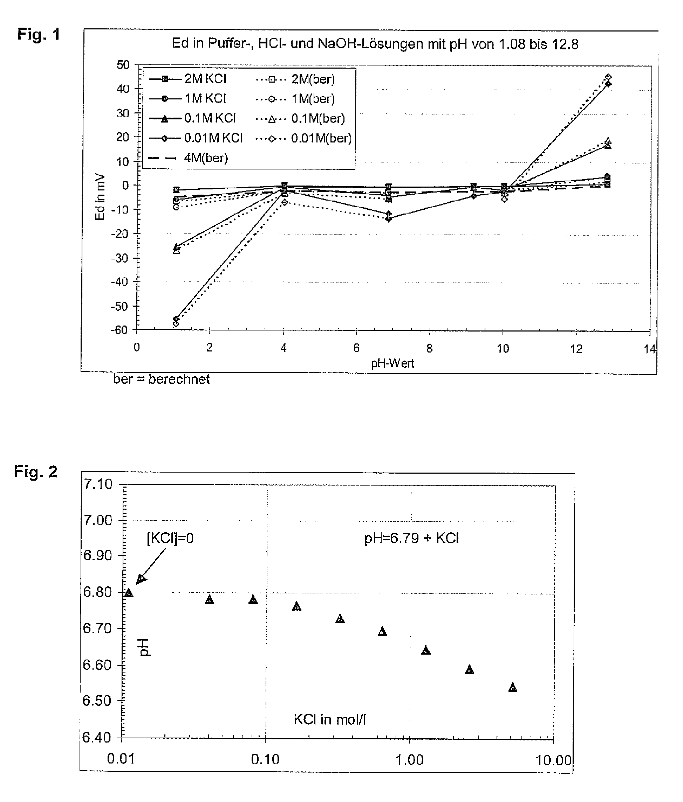

Bei extremen pH-Werten < 3 und > 11 steigen die Diffusionspotentiale stark an, insbesondere, wenn die KCl-Konzentration des Brücken- oder Referenzelektrolyten stark abstimmt. Dieses Verhalten ist in Fig. 1 dargestellt.

Wie in Fig. 1 ferner dargestellt ist, ist die Übereinstimmung zwischen den nach Henderson berechneten Werten und den experimentell ermittelten Werten oft nicht mehr so gut, wenn die Messlösung mehrere unterschiedliche Ionensorten enthält.

Die Erfindung wird im Folgenden näher dargestellt:

Im Idealfall und bei neuen Messketten liegt eine hohe KCl-Konzentration in dem Elektrolyten der Referenzelektrode am Diaphragma/Liquid Junction vor.

Bei den immer häufiger eingesetzten Gel- oder Polymerelektrolyten stellt sich aber schon nach kurzer Einsatzdauer zum Beispiel im Wasser-/Abwasserbereich ein KCl-Konzentrationsprofil ein, das zum Liquid Junction hin nur noch eine geringe KCl-Konzentration aufweist. Wird diese Elektrode nun in eine verdünnte Säure, Lauge oder in Pufferlösungen getaucht, entstehen am Liquid Junction völlig andere Diffusionspotentiale als bei der neuen, unverbrauchten Messkette. Aus Fig. 1 geht hervor, dass bei geringen KCl-Konzentrationen die Diffusionspotentiale wesentlich größer sind als bei hohen KCl-Konzentrationen. Wird die Messkette in einer verdünnten Säure eingesetzt, verringert sich nicht nur die KCl-Konzentration am Liquid Junction, sondern zusätzlich diffundiert die Säure in den Brücken- oder Referenzelektrolyten ein. Wenn diese Messkette nach dem Einsatz in Säure zur Kalibrierung in die Referenz-Pufferlösung getaucht wird, entstehen am Diaphragma teilweise sehr große Diffusionspotentiale durch den Kontakt der Säure mit der Pufferlösung. Nur langsam stellt sich durch Diffusion ein Konzentrationsausgleich ein, der mit einer Verringerung der Diffusionspotentiale verbunden ist. Dieser Vorgang führt zu dem oben beschriebenen langsamen Einstellverhalten. Je nach den Bedingungen, denen die Messkette im Betrieb ausgesetzt war, kann die Einstellung eines konstanten Potentials bis zu 20 Minuten und mehr Zeit in Anspruch nehmen.

Hier setzt die Erfindung ein. Durch Zusatz eines Leitsalzes in hoher Konzentration zu der für die Kalibrierung benutzten üblichen (Referenz-)Pufferlösung stellt sich bei der Kalibrierung ein konstantes Potential in der Messkette in der Regel in maximal 2 bis 3 Minuten ein.

Die bisher benutzten üblichen Referenz-Pufferlösungen sind in ihrer Zusammensetzung standardisiert und entsprechen den Vorschriften der Normen DIN 19266 oder DIN 19207 des Deutschen Instituts für Normung oder entsprechenden Vorschriften des NIST (National Institut of Standards and Technology, USA).

Im Labor werden üblicherweise Pufferlösungen nach DIN DIN 19266 oder NIST verwendet mit den pH-Werten im Bereich 4,01 bis 10,01. Diese Pufferlösungen enthalten Puffersubstanzen in niedrigen Konzentrationen von meist 0.05 mol/l.

Für den industriellen Bereich werden in der Regel Pufferlösungen mit höherer Pufferkapazität und höheren Konzentrationen an Puffersubstanzen, z.B. nach DIN 19267, eingesetzt. Als typische Beispiele gelten der Zitronensäure-Phosphat-Puffer mit pH=6,79 bei 25°C und der Zusammensetzung 0,155 mol/l Dinatriumhydrogenphosphat-Dodecahydrat und 0,0228 mol/l Zitronensäure-Monohydrat und der Acetat-Puffer mit pH=4,65 und der Zusammensetzung 0,1 mol/l NaOH und 0.2 mol/l Essigsäure.

Diesen jedem Fachmann wohlbekannten Pufferlösungen wird gemäß der Erfindung ein Leitsatz in hoher Konzentration zugesetzt. Die Pufferlösung enthält das Leitsalz in einer Konzentration von mehr als 0,2 mol/l, vorzugsweise in einer Konzentration von mindestens 1 mol/l. Die maximal mögliche Konzentration an Leitsalz entspricht der Sättigungskonzentration. Besonders bevorzugt ist eine Leitsalzkonzentration von 1 mol/l bis 3 mol/l. Setzt man Lösungen im Bereich der Sättigungskonzentration ein, so besteht die Gefahr des Auskristallisierens bei niedrigen Temperaturen.

Es sind bereits Pufferlösungen bekannt, die Leitsalze enthalten. Diese sind jedoch in Konzentrationen von 0.1 mol/l oder weniger vorhanden und sind Bestandteil des Puffersystems. Mit diesen Konzentrationen ist die erfindungsgemäße Wirkung einer schnellen Potentialeinstellung nicht erreichbar. Ferner wirkt sich das meist verwendete NaCl eher negativ auf das Diffusionspotential aus, da der Unterschied in den Beweglichkeiten von Natrium- und Chlorid-Ionen recht groß ist.

Als Leitsalze werden vorzugsweise solche Salze oder Salzmischungen verwendet, bei denen Kationen und Anionen möglichst gleich große Ionenbeweglichkeiten besitzen und keine negativen Wechselwirkungen mit den Elektrolyten der Messketten oder den Inhaltsstoffen der Pufferlösungen eingehen. Unter möglichst gleich großer Ionenbeweglichkeit wird verstanden, dass die Ionenbeweglichkeit zwischen Anion und Kation um nicht mehr als 20 % bevorzugt nicht mehr als 10 % voneinander abweichen. Geeignet als Leitsalze sind z.B. KCl, $KNO_3$, $NH_4Cl$, $NH_4NO_3$, CsCl, RbCl, $BrJ^-$, Alkalinitrite und - Perchlorate, besonders verbreitet in der Praxis der pH-Messung sind KCl oder $KNO_3$, die z.B. in großem Umfang in Elektrolytschlüsseln oder als Elektrolyt Verwendung finden.

Durch Versuche mit unterschiedlichen Pufferlösungen, denen KCl und $KNO_3$ zugesetzt wurde, konnte festgestellt werden, dass sich das Potential von in Säure und Lauge eingesetzten Messketten mit Gel- oder Polymerelektrolyten wesentlich schneller einstellt und daß auch geringere Diffusionspotentiale bei der Kalibrierung auftreten als in Pufferlösungen ohne Zusatz der Leitsalze. In solchen Pufferlösungen erfolgt daher die Kalibrierung schneller und ist mit geringeren Messabweichungen verbunden. Nach der schnelleren Wartung mit den erfindungsgemäßen Pufferlösungen wird daher zusätzlich der Vorteil geringerer Messunsicherheiten erreicht.

Ferner sind die Messwerte in den neuen Pufferlösungen stabiler wegen der höheren Leitfähigkeit durch die zusätzlichen Leitsalze.

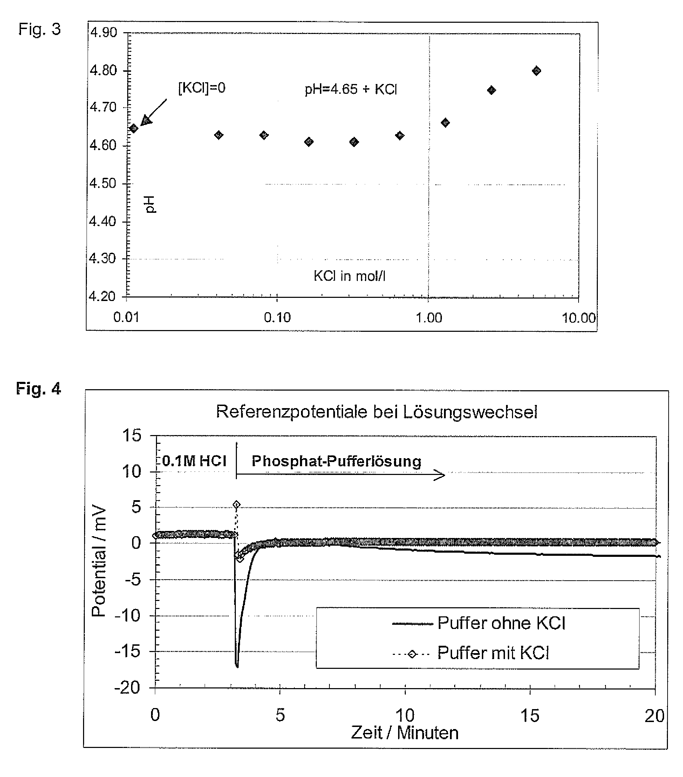

Bei Zugabe der Leitsalze zu einer bekannten Pufferlösung ändert sich deren pH-Wert und im Allgemeinen auch ihr Temperaturverhalten. Diese Werte müssen daher vor Einsatz der mit Leitsalz versehenen Pufferlösung als Referenz-Pufferlösung neu bestimmt werden. Fig. 2 und Fig. 3 zeigen die Veränderungen des pH-Werts in zwei Standard-Pufferlösungen mit dem pH-Wert von 6,79 (ohne KCl) und 4,65 (ohne KCl).

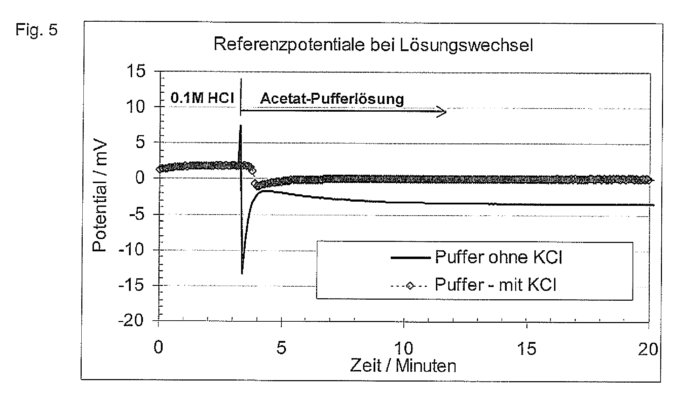

Die hervorragenden Wirkungen der neuen Referenz-Pufferlösung werden anhand der in den Figuren 4 und 5 dargestellten Beispiele 1 und 2 gezeigt.

Gemäß Beispiel 1 (Fig. 4) wurde eine Einstabmesskette des Typs PL80120 (Hersteller Schott Instruments) für eine Stunde in 0,1 M HCl gelagert und anschließend in eine Zitronensäure-Phosphat-Pufferlösung gebracht. Die Pufferlösung hatte eine Zusammensetzung nach DIN19267, wie weiter oben beschrieben. Es zeigt sich, dass sich in der herkömmlichen Zitronensäure-Phosphat-Pufferlösung mit pH = 6,79 ein konstantes Referenz-Potential erst nach ca. 20 Minuten einstellt. Gemessen wird das Referenz-Potential gegen eine Bezugselektrode gleicher Art und einen Elektrolytschlüssel mit Pt-Diaphrapma und 4mol/l KCl-Elektrolyt. Nach Zusatz von 3 mol/l KCl (und einer entsprechenden Neu-Bestimmung des pH-Wertes (pH = 6,37) der Pufferlösung) erfolgt die Einstellung eines konstanten Potentials bereits nach ca. 2 Minuten.

Beispiel 2 (Fig. 5) zeigt den Vergleich zwischen einer Acetatpufferlösung mit und ohne Leitsalzzusatz. Es wurde eine Einstabmesskette wie im Beispiel 1 benutzt. Die Einstabmesskette wurde wie im Beispiel 1 eine Stunde in 0,1 m HCl gelagert. Anschließend erfolgte die Neu-Kalibrierung durch Eintauchen in eine Standard-Acetat-Pufferlösung mit einem pH-Wert von 4,65 und einer Zusammensetzung wie weiter oben beschrieben. Wie aus Fig. 5 ersichtlich, stellt sich ein konstantes Potential an der Messkette erst nach ca. 10 Minuten ein. Taucht man dagegen die Messkette in eine Acetat-Pufferlösung gleicher Zusammensetzung, die jedoch zusätzlich KCl als Leitsalz in einer Konzentration von 3 mol/l enthielt, so war ein konstantes Potential bereits nach ca. 2 Minuten erreicht.

Die vorteilhaften Wirkungen des Leitsalz-Zusatzes treten mit allen wäßrigen Systemen von Pufferlösungen auf.

Die erfindungsgemäßen Pufferlösungen bieten die Möglichkeit, mit vorhandenen Messgeräten, Messketten und gewohnten und bewährten Kalibrierverfahren kürzere Wartungszeiten, geringeren Wartungsaufwand und verringerte Messunsicherheiten zu erreichen.

Auch und besonders bei Einsatz von automatisierten Fernkalibriersonden verbessert sich die Messgenauigkeit wegen der schnelleren Einstellung der Gleichgewichtspotentiale, und die beschriebenen Nachteile der Kalibrierung im Labor können vermieden werden.

Besonders geeignet sind die gefundenen Referenz-Pufferlösungen für die Kalibrierung von Messketten mit Gel- und Polymerelektrolyten, die bisher eine besonders lange Zeit bis zur Einstellung eines konstanten Potentials für die Kalibrierung benötigten.

**Patentansprüche**

1. Referenz-Pufferlösung für die Schnell-Kalibrierung von pH-Messeinrichtungen bestehend aus einer Pufferlösung mit bekanntem pH-Wert, die ein Leitsalz mit einer Konzentration von mehr als 0,2 mol/l enthält.

2. Referenz-Pufferlösung nach Anspruch 1, **dadurch gekennzeichnet, dass** die Konzentration des Leitsalzes 0,5 bis 3 mol/l beträgt.

3. Referenz-Pufferlösung nach Anspruch 1 oder 2, **dadurch gekennzeichnet, dass** die Ionenbeweglichkeiten für das Anion und das Kation des Leitsalzes möglichst gleich groß sind.

4. Referenz-Pufferlösung gemäß den Ansprüchen 1 bis 3, **dadurch gekennzeichnet, dass** die Ionenbeweglichkeiten von Anion und Kation des Leitsalzes um nicht mehr als 20%, insbesondere nicht mehr als 10 %, voneinander abweichen.

5. Referenz-Pufferlösung nach Anspruch 1 oder 2, **dadurch gekennzeichnet, dass** das Leitsalz KCl und/oder $KNO_3$ ist.

6. Referenz-Pufferlösung nach einem der Ansprüche 1 bis 5, **dadurch gekennzeichnet, dass** sie aus einer Pufferlösung nach DIN 19266 oder DIN 19267 oder NIST bestehen und das Leitsalz als Zusatz enthalten.

**Fig. 1**

Ed in Puffer-, HCl- und NaOH-Lösungen mit pH von 1.08 bis 12.8

ber = berechnet

**Fig. 2**

Fig. 3

Fig. 4

Fig. 5

**Referenzpotentiale bei Lösungswechsel**

0.1M HCl    Acetat-Pufferlösung

Potential / mV

——— Puffer ohne KCl

--⋄-- Puffer - mit KCl

Zeit / Minuten

Europäisches
Patentamt

European
Patent Office

Office européen
des brevets

**EUROPÄISCHER RECHERCHENBERICHT**

**Nummer der Anmeldung**

EP 09 15 6693

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 564 549 A (HAMILTON BONADUZ AG [CH]) 17. August 2005 (2005-08-17) * Absätze [0022], [0037], [0038] * ----- | 1-6 | INV. G01N27/416 |
| D,A | "DIN 19267: pH-Messung, Technische Pufferlösungen vorzugsweise zur Eichung von technischen pH-Messanlagen" DIN, August 1978 (1978-08), XP008107682 ----- | | |
| D,A | "DIN 19266: pH-Messung, Referenzpufferlösungen zur Kalibrierung von pH-Messeinrichtungen" DIN, Januar 2000 (2000-01), XP008107683 ----- | | |

| RECHERCHIERTE SACHGEBIETE (IPC) |
|---|
| G01N |

Der vorliegende Recherchenbericht wurde für alle Patentansprüche erstellt

| Recherchenort | Abschlußdatum der Recherche | Prüfer |
|---|---|---|
| Den Haag | 26. Juni 2009 | Kraus, Leonie |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 15 6693

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2009

| Im Recherchenbericht angeführtes Patentdokument | Datum der Veröffentlichung | Mitglied(er) der Patentfamilie | Datum der Veröffentlichung |
|---|---|---|---|
| EP 1564549 A | 17-08-2005 | DE 202004002433 U1 | 07-07-2005 |

Für nähere Einzelheiten zu diesem Anhang : siehe Amtsblatt des Europäischen Patentamts, Nr.12/82

EPO FORM P0461

## IN DER BESCHREIBUNG AUFGEFÜHRTE DOKUMENTE

**In der Beschreibung aufgeführte Nicht-Patentliteratur**

• **P. Henderson.** *Z. Physik. Chem.,* 1908, vol. 63, 325